# EUROPEAN PATENT APPLICATION

(11) **EP 2 525 237 A1**
(43) Date of publication of application: **21.11.2012**
(21) Application number: 11275084.9
(22) Date of filing: 20.05.2011
(51) Int. Cl.: G01S 7/28, G01S 7/03

(54) **Rapid transmit to receive switching apparatus**

(71) Applicant: BAE Systems Plc, London SW1Y 5AD (GB)
(72) Inventor: The designation of the inventor has not yet been filed

(57) **Abstract**

A frequency generator and switching system is provided comprising an oscillator arranged to generate a signal for transmission, a switch capable of switching the oscillator between an "on" transmitting state in which a signal is generated for transmission and an "off" non-transmitting state. An amplifier is arranged to amplify a transmission signal and an antenna arranged to transmit a transmission signal, and the switch is configured such that the oscillator switches between a transmitting state and a non-transmitting state in a time period in the range from 0.5% to 5% of the time period of a transmission pulse.

A system is provided such that the change between configuring a RADAR circuit to transmit and to receive RADAR signals is swift and smooth. Thus a system is provided to enable optimisation the RADAR range and target information available.

## Description

The present invention relates to improved devices for transmitting and receiving signals, and particularly but not exclusively to a device for transmitting or a device for receiving RADAR signals and to an improved process for receiving RADAR signals.

There are many applications in the prior art using the reflection of RF (radio frequency) or microwave frequency signals across a relatively wide range of different frequencies for purposes of establishing ranging details about an area or target. The RF (radio frequency) or microwave frequency signals are synthesised or generated for the purpose of transmission.

The transmitted microwave or radio frequency signals are sent as a series of pulses towards a target region. The pulses are reflected back to a receiver from the target and information regarding the position and size of the target can be ascertained.

RADAR is a process which relies upon the reflection of radio waves from an object, such as an aircraft. The radio waves are transmitted from a RADAR transmitter and the time interval between their transmission and reception at the RADAR receiver is monitored to determine the distance of the object from the RADAR. By coordinating this measurement with the elevated and azimuthal directions of the transmitted signal, it is possible to determine the position of the object with respect to the RADAR and to track the position of the object in time.

Accurate measurement of distance and position require high-performance electronics. In many RADAR systems the receiver does not operate in its reception mode while the RADAR transmitter is transmitting radio waves. A duplexer enables the RADAR system to switch between transmitting and receiving at a predetermined rate. The time period taken for the RADAR system to execute one transmission pulse and to monitor one reception or 'listen' slot is the RADAR cycle. The percentage of the cycle during which radio waves are transmitted from the RADAR transmitter is known as the duty cycle of the system. A typical duty cycle might be 10%, i.e. a pulse transmission such that the transmission pulse occupies 10% of the entire RADAR cycle.

It is important to design the transmitter and receiver modules carefully to make best use of the full transmit period and the time allocated for the signal to be received i.e. the reception or 'listen' slot.

We have now devised an improved RADAR system with improved transmitting and receiving modules.

According to the first aspect of the present invention there is provided a switching system comprising; an oscillator arranged to generate a signal for transmission, a switch capable of switching the oscillator between an "on" transmitting state in which a signal is generated for transmission and an "off" non-transmitting state, an amplifier arranged to amplify a transmission signal and an antenna arranged to transmit a transmission signal, wherein the switch is configured such that the oscillator switches between a transmitting state and a non-transmitting state in a time period in the range from 0.1% to 5% of the time period of a transmission pulse.

The switching system provides a frequency generator and an increased speed of switching. The switching can be submicrosecond in each transmit/receive unit. The switching can be from 10 to 50 microsecond up to 100 microseconds for some applications.

The minimum distance range measurable using a RADAR system can be calculated by measuring the length (i.e. duration in time) of the transmission pulse, multiplying by the speed of light (the speed at which radio waves travel) and dividing by two, as the signal has travelled twice the range measureable (the pulse is transmitted to, and back from, a target). The duration in time measurement is also the time delay of the received pulse with respect to the transmission pulse. Thus, in order to detect closer targets at a smaller range a shorter pulse length is required.

The maximum range at which a target can be detected is also related to the transmit pulse. If the return signal from the target arrives at the receiver antenna when the next pulse is being sent out it is difficult for the receiver to process and distinguish the transmit and receive pulses. Therefore, in order to maximise the range, a sufficiently long period for receiving the signal should be used in between transmit pulses. An increased maximum range will therefore require a lower pulse repetition frequency.

A long range radar tends to use long pulses to transmit with a low pulse repetition frequency and long receive periods between transmission pulses.

The short pulses needed for good minimum range broadcast and detection have, by definition, less total energy, thus the return signal can be small and can lead to difficulties in detection of the target.

A system with the ability to switch rapidly between the transmit and the receive mode and able to provide a rapid turning off of the transmitter at the end of the transmit pulse period is desirable. A rapid switch from transmitting to receiving can lead to improved detection efficiency and range and can reduce the errors introduced from an incoming reflected signal arriving at the antenna when the next transmit pulse is already being sent out. The conversion of transmitter mode with a power amplifier to a receiver mode involves switching from the power amplifier to powering the low noise amplifier to receive signals.

Additionally, the leading or falling edge of a transmission pulse can introduce noise components and error into the transmission signal itself. This type of noise component or any overlap with the receive period, also noise, can lead to errors in target detection.

The invention also applies for a receiver unit where a switch is configured such that the receiver switches between a receiving state and a non-receiving state in a time period in the range from 0.1% to 5% of the time period of a transmission pulse. An embodiment of the invention can comprise a transmit/receive, TX/RX, unit comprising a signal chain capable of accepting a low level signal for transmission, a switch capable of switching the TX/RX unit between an on transmitting state and a off non transmitting/receiving state, an amplifier arranged to amplify a transmission signal and an antenna arranged to transmit the transmission signal, wherein the switch is configured such that the TX/RX unit switches between a transmitting and a non-transmitting state in a time period in the range of 0.1% to 5%. In an embodiment the time period is 0.5% to 1.0% of the time period of a transmission pulse.

In an embodiment the switch is an electronic switch and can be a Field Effect Transistor (FET). A FET includes the semiconductor construction features of a gate, a drain and a source terminal. In operation the FET functions in such a way so as to provide that the gate terminal, when acting under the influence of an applied voltage, creates a channel for electric current and electrons between the source terminal and the drain terminal. The FET can provide rapid switching from a connected state with the channel open to an unconnected state with the channel closed, and thus a transmitting to non-transmitting mode of the power amplifier. The FET effects the switching by releasing or "dumping" stored charge from the transistor terminals in a period of from around 2 to 3 microseconds to, typically, up to 100 to 500 nanoseconds.

A disadvantage of allowing a power amplifier (oscillator) to continue beyond a set transmit period is that a noise contribution from the power amplifier can be fed into the receiver without suitable protection such as a limiter and may lead to erroneous signals at the receiver antenna. Rapid switching between transmission and receiving mode (and a steep "falling edge" at the end of the transmission pulse) can avoid conflicting and erroneous information from the receiver antenna from the power amplifier. Thus, the fast switch effect avoids these potential oscillation and power damage problems that may arise with a power amplifier left in transmit mode for a significant period of time.

A further benefit of the sharp, rapid ceasing of the transmit pulse is that the receiver antenna can commence to look for received, reflected return signals from a target thus allowing closer targets (at a shorter minimum range) to be detected. A low minimum target range of around a few hundred meters is desirable for navigation systems.

In an embodiment the amplifier is a solid state amplifier.

In an embodiment the antenna comprises a phased array antenna, and can comprise a plurality of antenna. There may be several thousands of dipoles per face. There may be a plurality oscillators in an embodiment. The oscillator may be capable of generating a signal suitable for beam forming, the beam may be a narrowband signal and may generate fractional bandwidth appropriate to the array and the radar situation. There may be a circulator in the embodiment.

The technique of beam forming or shaping involves combining signals (summing) from a number of channels from a series of arms of an antenna. Beam forming can provide additional target information.

However, a period of a rising or falling "edge" of the transmit pulse can effect systems using beam forming and beam shaping techniques. A combination of signals used for beam forming and beam shaping applications are less likely to be affected with a rapid switch between transmission mode and receiving mode, as the affect of edge signal at the transmission pulse edge will be reduced.

The invention may also comprise a frequency control system for a switching system as previously described.

The invention may comprise a duplexer system comprising; an oscillator arranged to generate a signal for transmission as a pulse, a switch capable of switching the oscillator between an "on" transmitting state in which a signal is generated for transmission as a pulse and an "off" non-transmitting state, an amplifier arranged to amplify a transmission signal and an antenna arranged to transmit a transmission signal, wherein the switch is configured such that the oscillator switches between a transmitting state and a non-transmitting state in a time period in the range from 0.1% to 5% of the time period of a transmission pulse.

The invention may comprise a method of operating a switching system as previously described. The invention may also comprise a method of processing a signal using a switching system as previously described.

The present invention will now be described in greater detail, by way of example only, with reference to the accompanying drawings, in which:
Figure 1 represents a schematic of a RADAR system and RADAR components;
Figure 2 represents a circuit diagram of a microwave and analogue circuit of the present invention;
Figure 3 represents a circuit diagram of a microwave circuit of the present invention with additional details of a transmit/receive unit; and
Figure 4 represents a schematic illustration of a RADAR pulse in the RADAR system of the present invention. The upper graph shows the voltage at the power amplifier at point A on Figure 2 shown against the transmit/receive pulse duration, the lower graph represents the pulse of signal and the transmit/receive pulse duration.

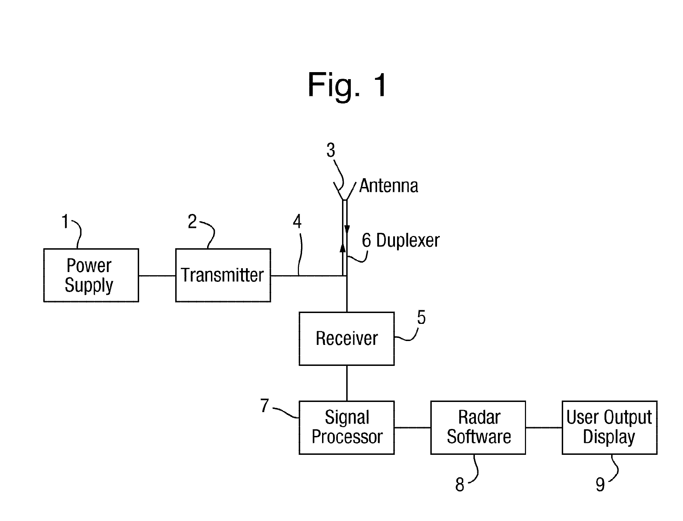

Referring to Figure 1, the RADAR system comprises power supply 1, connected to a transmitter 2. Transmitter 2 is capable of generating a radio signal with a signal source which can be described as a frequency generator or oscillator. A modulator may control duration and output of the frequency and power. A link is provided between transmitter 2 and antenna 3 via a waveguiding structure 4. Suitable waveguide structures could include a coaxial cable, a microstrip. An array of components may be used, in addition to the single transmitter and antenna shown in Figure 1. Receiver 5 is positioned downstream of antenna 3 and duplexer 6 is connected therebetween, thus the duplexer 6 provides a link from antenna 3 to receiver 5. A set of receiver electronics are provided downstream of the receiver 5. The set comprises a signal processor 7 along with electronic processing blocks of software 8 and a display 9. The signal processor 7 provides processing capacity and systems for dealing with the received pulse from a target. Radar software 8 is provided to control the antenna and radar hardware and to respond to radar scheduling, signalling, target return and other radar features. The software can process radar target information. The radar output information including target information is sent to a user display 9 and to a user interface.

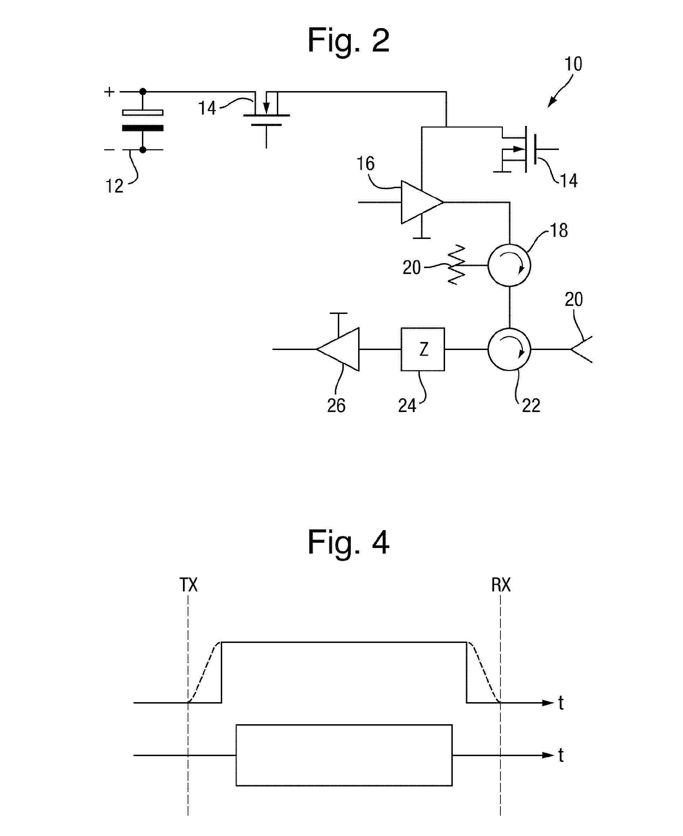

A duplexer component (a transmit/receive unit) and related Radio Frequency (RF) components are shown in further detail in Figure 2 including a rapid switching circuit. Figure 2 shows components of microwave switching circuit 10. The switching circuit 10 comprises a power supply 12 for providing power to field effect transistors (FET) 14 and a power amplifier 16. The power amplifier 16 is a solid state power amplifier and provides the power and RF signal to the antenna for the circuit. In the illustrated embodiment the switching circuit includes a first FET held across a voltage of 8 Vsolts. Other suitable load voltages can be envisaged, voltages up to 28 Volts can be used. The FET 14 can speed up the transition from the transmit pulse to the receive pulse by actively shorting out or decoupling the FET from the load voltage. The power amplifier 16 is connected to a first circulator 18 for routing the microwave and radio wave signals around the circuit 10. Load 21 is provided at the first circulator 18. Antenna 20 comprises connection to a second circulator 22 for routing a signal received from the antenna 20 into the receiver module. The switching circuit arrangement 10 further comprises a limiter 24 and a low noise amplifier (LNA) 26. The limiter 24 and the LNA 26 form part of the receiver. The limiter is provided for reducing excessive oscillations in the signal at the receiver, in particular the limiter acts to prevent excessive power being incident on the LNA input.

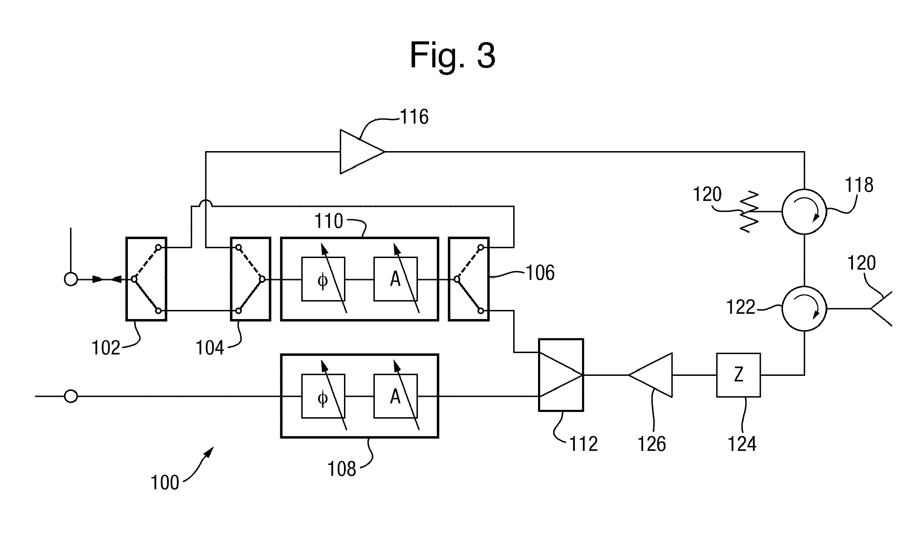

Referring to Figure 3 of the drawings, showing additional details of the transmit/receive unit (TX/RX) the invention comprises switching circuit 100 including a first, a second and a third router 102, 104, 106 for routing a transmission pulse and a receive pulse through the system, core processing chips 108, 110 including switching means such as an FET and a signal splitter 112. In an embodiment each router 102, 104, 106 comprises a single pole double throw switch for ease of connecting and reconnecting signal transmission pathways within the switching circuit 100. The arrangement shown in Figure 3 includes similar components for rapid switching as already illustrated in Figure 2, now shown in Figure 3 with similar numbering. Referring again to Figure 3, a power amplifier 116, in this embodiment a solid state power amplifier, is provided in communication with a circulator 118 and having a voltage load 121 attached thereto. Antenna 120, a further circulator 122, limiter 124 and LNA 126 provide similar functionality to those similar components in the switching circuit illustrated in Figure 2.

Referring to Figure 4 of the drawings, a transmission signal or pulse may be a microwave or RF signal and is represented as a pulse along a time axis (x axis). Figure 4 shows the voltage at point A on Figure 2 against the pulse duration. Solid lines represent the ideal transmission pulse and the side dashed line portions show the "falling edge" of the pulse and thus the period of time over which the pulse transmission builds up and fades away. The dashed line portion shown at TX represents the start of a pulse "on" for a transmission and corresponds to the powering up time of the power amplifier in anticipation of accepting and sending a low level transmission pulse (pulse illustrated in lower graph of Figure 4). The dotted line at RX is the time after which the receive or "listen" period can safely commence without overlap with a transmission pulse. The pulse may be microwave or radio wave frequency, the pulse duration is around 10 to 50 microseconds and can be as short as a few hundred nanoseconds (200-500 ns). The pulse block in Figure 4 comprises a number of cycles of radio or microwave frequency.

Referring again to Figure 3 and Figure 4, in operation, a pulse to be transmitted passes along a radio frequency path represented by the incoming arrow entering router 102 shown in Figure 3. A pulse such as this could originate from an application requiring beam shaping or forming. With routers 102, 104 and 106 set in the connected 'up' position (shown as a dashed line in Figure 3) the transmission pulse is routed along a path first through router 102, then router 106 and then core chip 110. The pulse is conditioned with a phase (ø) and amplitude (A) weighting at core chip 110. The pulse is transmitted through router 104 and amplified at power amplifier 116. The pulse is routed around circulator 118, (across voltage load 121) and emerges from circulator 122 to be transmitted by antenna 120.

A returning, reflected pulse received at the antenna 120 travels through circuit 100 as follows with routers 102, 104 and 106 in the 'down' connected position as shown by the solid line connections of Figure 3. Firstly, on collection by the antenna 120 the signal is routed via circulator 122 to limiter 124. The limiter 124 acts to protect the receiver electronics against any portion of the transmission pulse (high level) or large magnitude stray signals being reflected back into the receiver (RX) path. At beam splitter 112 the incoming signal is split to provide an alternative route or second beam path. One channel remains reserved for the signal and any noise components and the second channel can be used for beam shaping and conditioning.

A first component of the signal pulse is sent through core chip 108 for conditioning and optimising with phase (ø) and amplitude (A) weighting prior to detection and analysis by a difference method in order to gather target information. A second component of the signal pulse is sent through core chip 110 for conditioning and optimising with phase (ø) and amplitude (A) weighting. The signal is routed out though router 104, and then onto router 102, illustrated by the output exit arrow. The signal undergoes interrogation for target information with a summation method of analysis. This means the signal is then summed with the output from other transmission/ receive (TX/RX) units and passed for further processing.

A similar mode of transmission is illustrated in Figure 2 with a pulse generated with an oscillator and power amplifier 16 supplied from power supply 12 and FET 14. The pulse is then routed around first circulator 18, (across voltage load 21) and emerges from circulator 22 such that it can be transmitted by antenna 20. A returning, reflected pulse once received and collected at the antenna 20 travels through circuit 10 via circulator 22 to limiter 24. The limiter 24 acts to protect the receiver electronics and the LNA 26 and the receiver electronics against any portion of the transmission pulse (high level) or large magnitude stray signals being reflected back into the receiver (RX) path.

The change between configuring the circuits 10, 100 to transmit and to receive must be swift and smooth to optimise the RADAR range and target information available with the system.

In both circuits 10 and 100 the need for a simple, rapid switching mechanism is clear and from the foregoing it is therefore evident that the generator and switch of the present invention provide a simple yet effective means of changing between a transmitting and a receiving operation mode in a RADAR system.

The invention has been described with reference to specific examples and embodiments. However, it should be understood that the invention is not limited to the particular examples disclosed herein but may be designed and altered with the scope of the invention in accordance with the claims.

In the embodiment described above radio and microwave signals are illustrated and discussed. Other types of electromagnetic radiation could be used. Other types of transistor such as a Bipolar Junction Transistor (BJT) other than an FET could also be utilised in the invention as a rapid switch.

## Claims

1. A switching system comprising; an oscillator arranged to generate a signal for transmission, a switch capable of switching the oscillator between an "on" transmitting state in which a signal is generated for transmission as a pulse and an "off" non-transmitting state, an amplifier arranged to amplify a said transmission signal and an antenna arranged to transmit a said transmission signal, wherein the switch is configured such that the oscillator switches between a said transmitting state and a said non-transmitting state in a time period in the range from 0.1 % to 5% of the time period of a transmission pulse.

2. A switching system according to Claim 1, wherein the time period is in the range 0.5 to 1 % of the time period of the transmission pulse.

3. A switching system according to Claim 1 or Claim 2, wherein the time period is in the range from 30 nanoseconds to 500 nanoseconds.

4. A switching system according to any one of Claim 1, Claim 2 or Claim 3, wherein the switch is an electronic switch.

5. A switching system according to any of Claims 1 to 4, wherein the switch is a field effect transistor, FET.

6. A switching system according to any preceding claim, wherein the amplifier is a solid state power amplifier.

7. A switching system according to any preceding claim, wherein the antenna comprises a phased array antenna.

8. A switching system according to any preceding claim, further comprising a plurality of antenna.

9. A switching system according to any preceding claim, further comprising a plurality of oscillators.

10. A switching system according to any preceding claim, wherein the oscillator is capable of generating a signal suitable for beam forming.

11. A switching system according to any preceding claim, further comprising a circulator.

12. A frequency control system for a switching system according to any one of claims 1 to 10.

13. A duplexer system comprising; an oscillator arranged to generate a signal for transmission as a pulse, a switch capable of switching the oscillator between an "on" transmitting state in which a signal is generated for transmission as a pulse and an "off" non-transmitting state, an amplifier arranged to amplify a transmission signal and an antenna arranged to transmit a transmission signal, wherein the switch is configured such that the oscillator switches between a transmitting state and a non-transmitting state in a time period in the range from 0.1 % to 5% of the time period of a transmission pulse.

14. A method of operating a switching system according to any one of claims 1 to 11.

15. A method of processing a signal using a switching system of any one of claims 1 to 11.
